# EUROPEAN PATENT APPLICATION

(11) **EP 2 775 666 A1**
(43) Date of publication of application: **10.09.2014**
(21) Application number: 13188803.4
(22) Date of filing: 16.10.2013
(51) Int. Cl.: H04L 12/28, H04L 29/12, G06F 13/42, H04L 12/24, H04L 12/40

(54) **Sequential connection system and method for operating the same**

(30) Priority: 05.03.2013 CN 201310069693
(71) Applicant: Sercomm Corporation, Nangkang T'ai pei 115 (TW)
(72) Inventor: Lien, Chia-Hao, 242 New Taipei City (TW)
(74) Representative: Von Kreisler Selting Werner - Partnerschaft von Patentanwälten und Rechtsanwälten mbB

(57) **Abstract**

A sequential connection system includes a main control device, and a plurality of member devices sequentially connected thereto, of which first and second sequenced member devices are assigned with first and second addresses respectively. The main control device enables the first sequenced member device, and sends a first round scan command thereto. Receiving a scan command including the first address, the first sequenced member device sends a first device type message thereto. Accordingly, the main control device identifies and records the first device type message and the first address thereof. The main control device causes the first sequenced member device to enable the second sequenced member device, sends a second round scan command to the first and the second sequenced member devices, identifies and records a second device type message and the second address of the second sequenced member device.

## Description

### BACKGROUND

### Field of the Invention

The invention relates to a sequential connection system.

### Description of the Related Art

If a user wishes to connect a number of devices (e.g., 3G base stations, access points (APs), or femtocell stations) sequentially, the user needs to use and deal with a number of cables. In such a situation, these cables have to be connected to the devices, and the cables and the devices may be in a mess. In case that the user lacks technical knowledge, the user may be perplexed and as a result may connect the cables incorrectly.

### SUMMARY OF THE INVENTION

The invention is directed to a sequential connection system.

According to an embodiment of the invention, a sequential connection system is provided. The system includes a main control device, and a plurality of member devices, sequentially connected to the main control device, wherein a first sequenced member device and a second sequenced member device of the member devices are assigned with a first address and a second address respectively. The main control device enables the first sequenced member device, and sends a scan command of a first round to the first sequenced member device. When the first sequenced member device receives a scan command including the first address, the first sequenced member device sends a first device type message of the first sequenced member device to the main control device, and accordingly, the main control device identifies and records the first device type message and the first address of the first sequenced member device. The main control device causes the first sequenced member device to enable the second sequenced member device, sends a scan command of a second round to the first and the second sequenced member devices, and identifies and records a second device type message and the second address of the second sequenced member device.

According to another embodiment of the invention, a method for operating a sequential connection system is provided. The system includes a main control device, and a plurality of member devices, sequentially connected to the main control device, wherein a first sequenced member device and a second sequenced member device of the member devices are assigned with a first address and a second address respectively. The method includes: enabling the first sequenced member device by the main control device; sending a scan command of a first round to the first sequenced member device; when the first sequenced member device receives a scan command including the first address, sending, by the first sequenced member device, a first device type message of the first sequenced member device to the main control device; identifying and recording, by the main control device, the first device type message and the first address of the first sequenced member device; and causing, by the main control device, the first sequenced member device to enable the second sequenced member device, sending a scan command of a second round to the first and the second sequenced member devices, and identifying and recording a second device type message and the second address of the second sequenced member device.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 shows a block diagram illustrating a sequential connection system according to an embodiment.

FIG. 2 shows a flowchart illustrating scanning all member devices by a main control device according to an embodiment to obtain a connection sequence of the member devices and their device types.

FIG. 3 shows a block diagram illustrating the member devices according to an embodiment, sharing their internal hardware.

### DETAILED DESCRIPTION OF THE INVENTION

Embodiments of the system and method are provided in terms of structure and operations in the following with the drawings.

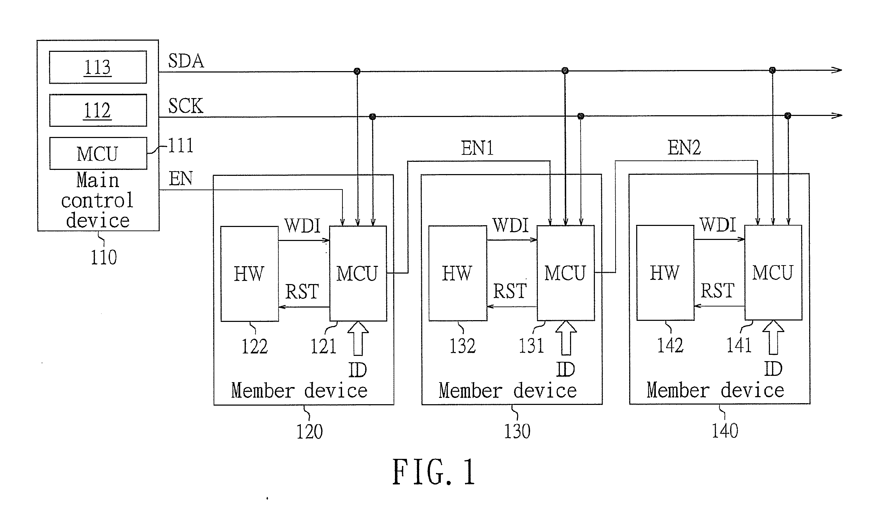

Referring to FIG. 1, a block diagram illustrates a sequential connection system according to an embodiment. As shown in FIG. 1, the sequentially connected system includes: a main control device 110, and a plurality of member devices 120, 130, 140 and so on. For the sake of illustration, FIG. 1 shows three member devices 120, 130, and 140 sequentially connected to the main control device 110, and the embodiment is not limited thereto. According to the description of the embodiment, it is easily to understand in the field of the art that more member devices can be sequentially connected to the main control device 110 in other possible embodiments.

The main control device 100 is connected to the member devices through a serial data line pin SDA, a serial clock line pin SCK, a main enabling pin EN. In the embodiments, pins SDA, SCK, and EN can be regarded as equivalents to signal lines SDA, SCK, and EN, for the sake of understanding.

Specifically, the serial data line pin and the serial clock line pin of the main control device 110 are to be connected to all the member devices in parallel, and the main enabling pin EN of the main control device 110 is only required to be connected to the member device 120 which is the first one of the member devices in terms of physical connection. In the following, the so called physical connection relationship indicates that the member device 120, for example, is directly physically connected to the main control device 110 and is the first one in physical relationship with the main control device 110.

The main control device 110 includes a microcontroller (MCU) 111, tables 112 and 113. The MCU 111 is used for controlling, for example, scanning the member devices, sending a warning signal to a system operator, and so on.

The tables 112 and 113, for example, are stored in a memory unit (not shown). The table 112 is employed to record relationship between device types and I2C addresses, which may be determined in advance or be implemented by programming according to the requirement. In one example, without limited thereto, a device with I2C (i.e. I-squared-C) address of 1 indicates a wireless access point (AP) device, and a device with I2C address of 2 indicates a femtocell station, and so on.

The table 113 records relationship between the sequence and their device types of all the member devices connected to the main control device 110. That is to say, the table 113 records the connection sequence of the member devices and the device types of the sequenced member devices. For instance, the table 113 records the device type of a first sequenced member device and the device type of a second sequenced member device and so on. As an example in FIG. 1, the member devices 120, 130, and 140 are the first, the second, and the third sequenced member devices, and so on.

When the main control device 110 completes scanning all the member devices, the main control device 110 knows the member devices connected to the main control device 110, their connection sequence and respective device types of the member devices.

The member device 120 includes a microprocessor 121 and a piece of internal hardware 122. Likewise, the member device 130 includes a microprocessor 131 and a piece of internal hardware 132. The member device 140 includes a microprocessor 141 and a piece of internal hardware 142. Each member device may have different internal hardware, and in the embodiment, the pieces of internal hardware 122, 132, and 142 are shareable for other member devices. The way of sharing will be described in the following. In addition, a technician may assign a member device with an address, such as I2C address, by way of an address pin ID of the microprocessor.

As shown in FIG. 1, the enabling pin ENi (i is an integer, i=1, 2, 3, and so on) of the microprocessor of a member device is connected to the microprocessor of a next sequenced member device. Upon receiving a command sent from the main control device or the previous sequenced microprocessor, the microprocessor of the member device enables the microprocessor of the next sequenced member device through the enabling pin ENi.

In the member device, the microprocessor and the piece of internal hardware have a watchdog indicator signal WDI and a reset signal RST. If the internal hardware operates normally, the internal hardware regularly sends the watchdog indicator signal WDI to the microprocessor. In this way, the microprocessor is informed of the internal hardware operating in normal. Conversely, if the internal hardware malfunctions, the internal hardware cannot normally send the watchdog indicator signal WDI to the microprocessor. As a result, the microprocessor learns that the internal hardware is not operating in normal currently. Thus, the microprocessor sends the reset signal RST to the internal hardware so as to reset the internal hardware. The reason for the above approach is that the internal hardware is not allowed to stop working or the interval for pausing operation needs to be as less as possible, in order to comply with a standard, for example.

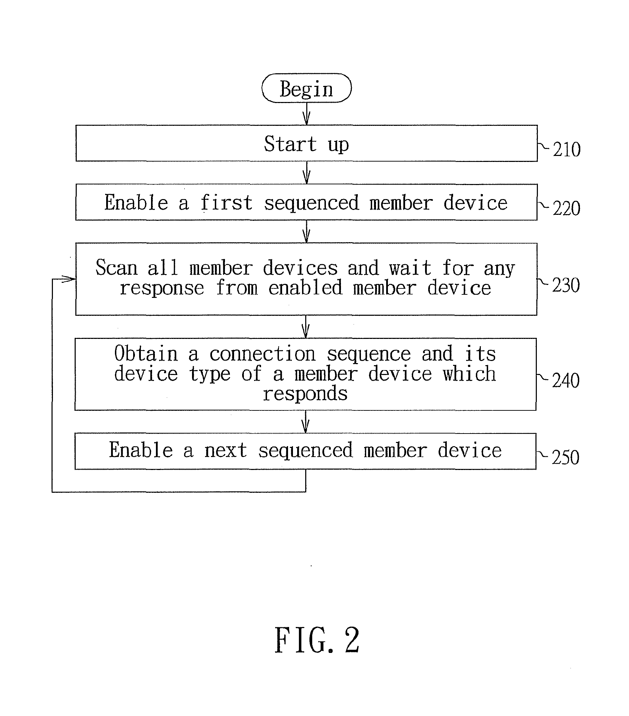

In the embodiment, the main control device 110 needs to obtain the connection sequence and respective device types of the connected member devices, which will be described as follows. Referring to FIGS. 1 and 2, FIG. 2 shows a flowchart illustrating scanning all member devices by a main control device according to an embodiment to obtain a connection sequence of the member devices and their device types.

Referring to FIG. 2, as illustrated in step 210, the main control device 110 and all the member devices 120-140 start up. In the embodiment, if any new member device is going to join the sequential connection system, the main control device 110 and all the member devices 120-140 are required to shut down and then start up. After starting up, the main control device 110 starts scanning to identify all the member devices connected to the main control device 110. That is, every time after starting up, the main control device 110 performs the steps of FIG. 2.

In step 220, the main control device 110 enables the first sequenced member device (as exemplified in FIG. 1, the first sequenced member device is the member device 120). Specifically, the main control device 110 enables the microprocessor of the first sequenced member device by enabling the first sequenced member device through the main enabling pin EN.

In step 230, the main control device 110 scans all the member devices, and waits for the responses of the enabled member devices. For instance, the main control device 110 sends a clock signal through the serial clock line pin SCK and sends a scan command through the serial data line pin SDA. As an example, the addresses for I2C commands range from 0 to 127 (e.g., 7-bit address), but the embodiment is not limited thereto. The main control device 110 sends a scan command including an address of 1 so as to check whether any member device responds. If not, the main control device 110 sends a scan command including an address of 2 so as to check whether any member device responds. Similar operations will be performed for several rounds. In the first round, the main control device 110 sends 255 scan commands with respective addresses from 1 to 255, so as to check if any member device responds. For example, the member device 120 has an I2C address of 5. When the member device 120 receives the scan command with an address of 5, the microprocessor 121 of the member device 120 responds. After receiving the response from the member device 120, the main control device 110 ascertains that in the first round, the member device 120 that responds is the first sequence member device (i.e., the connection sequence of the member device 120 is 1). In addition, after looking up its internal table 112, the main control device 110 ascertains the device type of the member device 120 (e.g., the member device with an address of 5 is a 3G base station), as shown in step 240. Thus, the main control device 110 needs to record the information (i.e., the address and the device type of the member device which responds firstly) in the internal table 113.

In step 250, the main control device 110 enables another member device indirectly. For instance, after the first round is completed, the main control device 110 sends a command to the microprocessor 121 of the member device 120 through the serial data line pin SDA, so as to cause the microprocessor 121 of the member device 120 through the enabling pin EN1 to enable the microprocessor 131 of the next sequenced member device 130, where the member device 130 is the next sequenced member device of the member device 120.

After that, the main control device 110 performs the second round of scanning. The way of scanning in the second round is substantially the same as that in the first round. For example, the member device 130 has an I2C address of 10. In the second round, the member devices 120 and 130 respond. Since the main control device 110 has identified the address and device type of the member device 120 in the previous round of scanning, the main control device 110, in this round, can ascertain the address (10), the physical connection sequence (the member device 130 is the second sequenced member device), and the device type of the member device 130. Likewise, the main control device 110 needs to record the information (the address and its device type of the member device which responds secondly) in its internal table 113.

As such, repeating the above scanning steps 230-250, the main control device can ascertain the addresses, physical connection sequence, and device types of all sequentially connected member devices. From the description above embodiment, the main control device 110 can ascertain the addresses, physical connection sequence, and device types of all sequentially connected member devices through three pins (SDA, SCK, and EN). The embodiment can be applied even if the main control device 110 is sequentially connected to a hundred and more member devices.

In some embodiments, the connection sequence of the member devices may require special concern for specific situations. For example, it is supposed that member devices, such as wireless communication devices, for example, a WiFi member device and an LTE (Long Term Evolution, LTE) member device are sequentially connected to a main control device. Since the operating frequency bands for the two wireless member devices are similar, the two wireless member devices may be disposed apart for a distance in order to prevent the two wireless member devices from interfering each other. In another example, if there is a member device with its temperature increasing easily, such kind of member device and the other member devices can be disposed alternately. As such, in some embodiments, it is important to ascertain the connection sequence of the member devices.

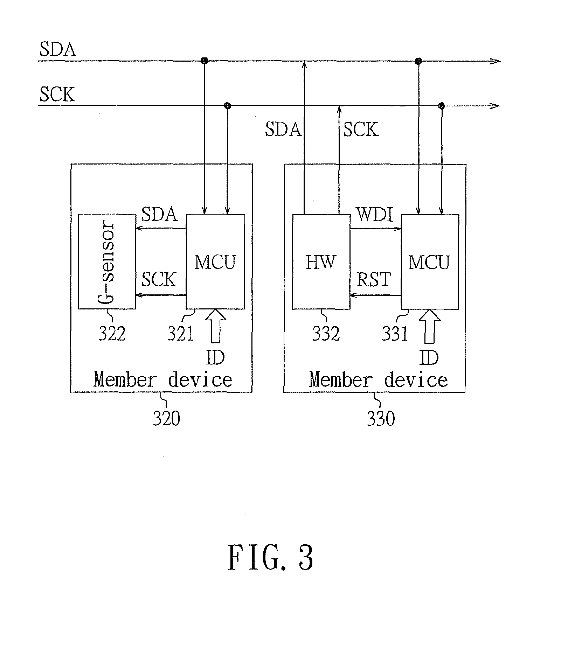

Referring to FIG. 3, a block diagram illustrates the member devices according to an embodiment, sharing their internal hardware. A member device 320 includes a microprocessor 321 and a G-sensor 322; and a member device 330 includes a microprocessor 331 and a piece of internal hardware 332. As an example, the member device 330 needs to obtain sense data of the G-sensor 322. The microprocessor 331 of the member device 330 can look up its internal table (not shown and the table is similar to the table 112 in FIG. 1, recording the relationship between I2C addresses and the device types). After the looking up of the table, it is learned that the I2C address for the member device including a G-sensor is, for example, 20, and the member device 330 can send a search command with an I2C address of 20 through the pin SDA. After receiving the search command, the member device 320 learns that there is another member device wishing to obtain the sense data of the G-sensor 322. In this case, after obtaining the sense data from the G-sensor 322, the member device 320 can send the sense data to all the member devices through the pin SDA. As such, the member device 330 can receive the sense data.

In one embodiment, if a piece of internal hardware is to be shared, the member device may send a search command to all member devices, and the member device satisfying the address (i.e., the member device including the internal hardware to be shared) can search sense data of its internal hardware and return the sense data to all the member devices. In this way, the advantages of resource sharing and reduced hardware cost can be achieved.

In some embodiments, a member device may be a 3G mini-base station, a wireless access point (AP), an LTE base station, a femtocell station, for example, but without limited thereto.

In addition, it is supposed that a law or standard specifies that the physical location (i.e., its longitude and latitude) of a member device (e.g., a femtocell station) is not allowed to be moved. If the member station is moved, the main control device is required to send a warning signal to a system operator, and the system operator is required to determine whether to disconnect the service for the member device whose location is moved. For this requirement, in the state of art, the member device (e.g., the femtocell station) needs to include position locating hardware (e.g., GPS) so as to obtain the longitude and latitude of its location, thus causing the high hardware cost. In contrast, according to an embodiment of the disclosure, the internal hardware of all the member devices sequentially connected to the main control device can be shared with each other, thus effectively leading to a reduced hardware cost.

Further, in the embodiment, all the member devices cannot be assigned with same I2C addresses, in order to prevent errors from happening. If such situation occurs (e.g., two or more member devices assigned with same I2C addresses), the main control device is required to inform the system operator after scanning and realizing this error, in order for the system operator to reassign the member devices having the same addresses with new addresses.

Furthermore, as mentioned in the above example, the longitude and latitude of some member device(s) are not allowed to be changed, under the requirement of a law or standard. However, in some embodiments, the connection sequence of the member devices can be changed for some demands (e.g., heat dissipation or prevention of wireless interference of each other), without changing the longitude and latitude of its location). That is, the main control device and all the member devices are shut down and then started up, and the scanning of all the member devices is completed by the main control device, so that the main control device records the latest connection sequence and corresponding device types of all the member devices.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A sequential connection system, **characterised in that** the system comprises:
a main control device, and
a plurality of member devices, sequentially connected to the main control device, wherein a first sequenced member device and a second sequenced member device of the member devices are assigned with a first address and a second address respectively;
wherein:
the main control device enables the first sequenced member device, and sends a scan command of a first round to the first sequenced member device;
when the first sequenced member device receives a scan command including the first address, the first sequenced member device sends a first device type message of the first sequenced member device to the main control device, and accordingly, the main control device identifies and records the first device type message and the first address of the first sequenced member device; and
the main control device causes the first sequenced member device to enable the second sequenced member device, sends a scan command of a second round to the first and the second sequenced member devices and the main control device identifies and records a second device type message and the second address of the second sequenced member device.

2. The sequential connection system according to claim 1, **characterised in that**:
the main control device comprises a microprocessor, a first record table and a second record table;
the first record table records relationship between corresponding device types and corresponding addresses of the member devices; and
the second record table records relationship between a connection sequence and corresponding device types of the member devices connected to the main control device.

3. The sequential connection system according to claim 1, **characterised in that**:
each of the member devices comprises a corresponding microprocessor and a corresponding piece of internal hardware;
when the piece of internal hardware operates in normal, the piece of internal hardware regularly sends a monitoring signal to the microprocessor; and
when the piece of internal hardware cannot send the monitoring signal to the microprocessor normally, the microprocessor resets the piece of internal hardware.

4. The sequential connection system according to claim 1, **characterised in that**:
the main control device is connected to the member devices in parallel through a data pin and a clock pin;
the main control device has a main enabling pin connected to the first sequenced member device; and
the first sequenced member device has a first enabling pin connected to the second sequenced member device.

5. The sequential connection system according to claim 4, **characterised in that**:
the main control device sends a clock signal through the clock pin to all the member devices;
the main control device sends the scan command of the first round and the scan command of the second round through the data pin to all the member devices;
the main control device enables the microprocessor of the first sequenced member device through the main enabling pin; and
the first sequenced member device enables the microprocessor of the second sequenced member device through the first enabling pin.

6. The sequential connection system according to claim 3, **characterised in that**:
one of the member devices searches its corresponding internal table for a target address of a target piece of internal hardware;
the one of the member devices sends a search command including the target address to all the member devices; and
another one of the member devices satisfying the target address sends data of a corresponding piece of internal hardware of the another one of the member devices to all the member devices, in response to the search command.

7. A method for operating a sequential connection system, the system including a main control device, and a plurality of member devices, sequentially connected to the main control device, wherein a first sequenced member device and a second sequenced member device of the member devices are assigned with a first address and a second address respectively, **characterised in that** the method comprises the steps of:
the main control device enabling the first sequenced member device;
the main control device sending a scan command of a first round to the first sequenced member device;
when the first sequenced member device receives a scan command including the first address, the first sequenced member device sending a first device type message of the first sequenced member device to the main control device;
the main control device identifying and recording the first device type message and the first address of the first sequenced member device; and
the main control device causing the first sequenced member device to enable the second sequenced member device, sending a scan command of a second round to the first and the second sequenced member devices, and identifying and recording a second device type message and the second address of the second sequenced member device.

8. The method for operating the sequential connection system according to claim 7, **characterised in that**:
the main control device comprises a microprocessor, a first record table and a second record table;
the first record table records relationship between corresponding device types and corresponding addresses of the member devices; and
the second record table records relationship between a connection sequence and corresponding device types of the member devices connected to the main control device.

9. The method for operating the sequential connection system according to claim 7, **characterised in that**:
each of the member devices comprises a corresponding microprocessor and a corresponding piece of internal hardware;
when the piece of internal hardware operates in normal, the piece of internal hardware regularly sends a monitoring signal to the microprocessor; and
when the piece of internal hardware cannot send the monitoring signal to the microprocessor normally, the microprocessor resets the piece of internal hardware.

10. The method for operating the sequential connection system according to claim 7, **characterised in that**: the main control device is connected to the member devices in parallel through a data pin and a clock pin; the main control device has a main enabling pin connected to the first sequenced member device; and the first sequenced member device has a first enabling pin connected to the second sequenced member device, the method further comprises the steps of:
the main control device sending a clock signal to all the member devices through the clock pin;
the main control device sending the scan command of the first round and the scan command of the second round to all the member devices through the data pin;
the main control device enabling the microprocessor of the first sequenced member device through the main enabling pin; and
the first sequenced member device enabling the microprocessor of the second sequenced member device through the first enabling pin.

11. The method for operating the sequential connection system according to claim 9, **characterised in that**:
one of the member devices searches its corresponding internal table for a target address of a target piece of internal hardware;
the one of the member devices sends a search command including the target address to all the member devices; and
another one of the member devices satisfying the target address sends data of a corresponding piece of internal hardware of the another one of the member devices to all the member devices in response to the search command.
